# EUROPEAN PATENT SPECIFICATION

(11) **EP 3 247 479 B1**
(45) Date of publication and mention of the grant of the patent: **12.12.2018**
(21) Application number: 15710270.8
(22) Date of filing: 23.01.2015
(51) Int. Cl.: B01D 1/16, B01D 1/20, B01D 17/04, B01D 29/90, B01D 29/11, B01D 36/00, C10G 31/06, C10G 31/09, C10G 33/06

(54) **WATER AND OIL SEPARATION METHOD USING COMPRESSING TUBES TO VAPORIZE WATER**
VERFAHREN ZUM TRENNEN VON WASSER UND ÖL MIT STAUCHROHREN ZUR VERDAMPFUNG VON WASSER
PROCÉDÉ DE SÉPARATION D'EAU ET D'HUILE À L'AIDE DE TUBES DE COMPRESSION POUR VAPORISER L'EAU

(43) Date of publication of application: 29.11.2017
(73) Proprietor: Norwegian Field Industry AS, 1340 Skui (NO)
(72) Inventor: NILO, Marius Armann, N-1481 Hagan (NO)
(74) Representative: Acapo AS
(86) International application number: PCT/NO2015/050015
(87) International publication number: WO 2016/118016

(56) References cited:
- WO-A1-2007/015644
- WO-A1-2012/164348
- US-A- 998 670
- US-A- 5 630 912
- US-A1- 2014 102 157

## Description

The present invention pertains to a method and apparatus for removing water from oil. The present invention furthermore pertains to a method and apparatus for removing water from oil in combination with a tubular filter for filtering solid particles from said oil and a method of manufacturing said filter and a method of filtering oil.

### INVENTION BACKGROUND

The technical industries have problems with water contaminations in oils for lubrication, different power transmissions or transformers (hydraulics, gears, valves, etc.), wherein even small quantities of water severely impair the properties of said oils. Such contaminated lubricating oil used in internal combustion engines and other equipment is a principal cause of excessive wear and deterioration of engine parts and related equipment. At present, most internal combustion engines employ only a conventional mechanical filter for extracting materials such as dirt, carbon, soot, metal particles and other similar foreign material from lubricating oil. Liquid contaminants such as condensates, water and fuel, are often emulsified in the lubricating oil and cannot be separated by a conventional filter. It is therefore necessary for the lubricating oil of internal combustion engines using such mechanical filters to be changed at frequent intervals in order to minimize engine damage by contaminants entrained therein.

In recent years, the increasing worldwide price of oil has made it imperative to develop ways of reconditioning oil, e.g. lubricating oil, so that it may be used and reused for a longer time than hitherto. In this way, only small amounts of additional lubricating oil are required by engine usage.

The problem of liquid contaminants has been recognized, and some efforts have been made to develop devices, which use heat as a mechanism for separating oil and contaminants. Exemplary previous devices of this type are disclosed in US 2,635,759, US 2,785,109, US 2,839,196, US 3,550,871, US 3,616,885, US 3,915,860, US 4,006,084, US 4,146,475 US 4,349,438.

These filters are, however not very efficient in removing water from oil. Therefore, these conventional oil filters, largely, are only slightly superior to the prior disposable filters, which remove only solid contaminants. With this oil filtering devices the engine lubricating oil may only be used for a slightly longer time than with conventional solid contaminant removing filters. The marginal improvement in oil recycling life that results from removing a small amount of the liquid contaminants cannot justify the incremental cost required to achieve this improvement.

In addition to the above-mentioned kind of filtering devices, it has for example been suggested in WO 86/04830 and WO 2007/015644 to use atomizing nozzles in order to enhance the separation of water from lubricating oil. However, there has been a need in the marked for more efficient filters for removal of water, from oil, and for efficient filters, which are able to effectively remove both water and solid particle contaminants in oil.

Traditionally, existing fluid filters that are adapted for filtering particles from fluids, are surface filters in the sense that the filtering occurs at just the outer surface of the element where the fluid first enters the element. With very fine surface filter elements, particles tend to accumulate at the outer surface, thereby loading the filter element and cutting off the flow of fluid through it. As a result, filtering is degraded and the element must be changed more frequently than desired. This has been a particular problem with high viscosity fluids such as oil, engine oil in particular. In order to alleviate this surface build-up problem so called string/yarn wound filters wherein a yarn is wound on a tubular bobbin have been developed. These filters have the advantage, that the fluid is filtered all the way along the thickness of the wound yarn. Examples of such yarn wound filters are known from EP 0489157, US 5,552,065, US 4,761,231, US 5,772,952, FR 2097502 and WO 2007/015643.

WO 2012/164348 A1 (Kristiansen, Ingolf) relates to a method and an apparatus for removing alien fluids from a petrochemical product. Pre-heated oil is atomized, i.e. transformed into tiny droplets when passing nozzles, and the droplets are drawn out by vacuum in a ventilation chamber. A problem with this solution is the large power requirement.

US 5 630 912 A (Lefebvre, Byron) relates to an oil reclamation device with evaporation base and head mounted filter. Pre-heated oil is fed onto a heated surface to evaporate unwanted liquids from the oil. The unwanted liquids are then vented out of the evaporation chamber. A problem with this solution is the large power requirement.

This filter alleviates some of the problems associated with the other types of filters mentioned above and known in the art. However, it has been observed that some of the water that evaporates from the oil tend to condensate on the inner surface of the ventilation chamber, and thereby flow back together with the oil. Furthermore, it has proven to be technically complicated in praxis to provide adequate (i.e. enough, but not too much) heating of the distillation head, especially when the filter is used to filter water from a highly flammable type of oil, such as diesel.

### SUMMARY OF THE INVENTION

It is thus an object of the invention to provide an improved, and less complicated, method and apparatus for removing water from oil.

It is a further object of the invention to provide an improved, and less complicated, method and apparatus for removing both water and solid particle contaminants in oil.

According to the present invention, the above-mentioned and other objects are fulfilled by a first aspect of the invention pertaining to a filter for the removal of water from oil, the filter comprising a distillation element having an inlet pipe that in one end is to be fluidly connectable to a reservoir of oil to be filtered, and in the other end being fluidly connected to a distillation head, said distillation head comprising a plurality of compression tubes for compressing said oil into an evaporation chamber, whereby eventual water within the oil evaporates from the said oil, the filter further comprising a tubular core with a plurality of apertures and a hollow interior, said core having an open end for fluid communication with the hollow interior, a length of yarn wound around an outer surface of the core, wherein the filter further comprises means for blowing air or an inert gas into the evaporation chamber for removal of the water vapor during use of the filter.

By providing a plurality of compression tubes for injecting the oil into the evaporation chamber, the oil is compressed as a liquid into the evaporation chamber. Due to the different thermodynamic properties of the oil and the water, they react differently to changes in heat and pressure. These vaporized contaminants (steam) is then blown out of the evaporation chamber by the air or inert gas, which is blown into the evaporation chamber, while the oil is drained out in liquid form. A plurality of compression tubes is used in order to ensure an adequate flow rate, and the actual number of compression tubes needed may be chosen in dependence of the particular application of the inventive filter and oil types.

The technical industries have particular difficulties with water contaminants in oils used for lubrication and different transmissions or transformers (hydraulics, gears, valves etc.). These contaminants arise from condensation, leaks, frost, etc. Non combusted fuel remnants, acids and eventually other alien liquids can also be present. Acids and bacterial growth may be formed in the presence of water. Thus, by removing water, a lot of related problems are solved. Furthermore, since the filter additionally employs a length of yarn that is wound around a tubular core, effective removal of solid particles is achieved as well as removal of water in one single operation. An inert gas instead of air is preferably used in case the oil to be filtered is highly flammable type of oil, such as diesel.

In a preferred embodiment of the filter according to the invention, said means for blowing air or an inert gas into the evaporation chamber is for example a fan that is in fluid communication with said evaporation chamber via a pipe.

In a further preferred embodiment of the filter according to the invention, the evaporation chamber comprises an outlet for the air or inert gas, which during use is blown into the evaporation chamber.

Preferably, the compression tubes are made from a metal or metal alloy comprising aluminium, which has good heat conductivity and low reactivity with oil.

In an embodiment the compression tubes have barrel sizes that are smaller than 7 mm, preferably smaller than 3 mm or between 0.5 mm and 7 mm, preferably between 0.5 mm and 3 mm, more preferably between 0.7 and 1.2 mm. Separation is achieved by selecting a barrel size that creates a significant pressure differential across the opening. The viscosity of different oils is largely dependent of temperature, so the barrel sizes are preferably chosen in dependence of the temperature increase the oil undergoes during friction with the barrels, and the type of oil to be filtered. To this end the applicant estimates that by using barrel sizes as mentioned above it would be possible to separate water from most types of oils.

However, there is a delicate balance in selecting proper barrel opening sizes, because the opening size controls both the extent of separation and the flow rate through the filter. Selection of the barrel opening also controls the pressure differential between the oil inlet and the evaporation chamber.

The compression tube have preferably a barrel that is rifled in order to thereby impart a rotational motion to the compressed injected oil and thereby enhance the separation (evaporation) of contaminants from them.

In a preferred embodiment the length of the barrel of each of the compression tubes is between 4 mm and 40 mm.

In a preferred embodiment the evaporation chamber has a sloped floor with an oil drain that during use is configured to be situated at the lowest place of the floor. Hereby is achieved that the oil - relieved form most of the water contaminants - may be drained from the bottom of the evaporation chamber, while the gaseous phase, water steam, is removed from an upper part of the evaporation chamber by blowing in an inert gas or air. Here the terms "lower" and "upper" refers to the lower and upper parts of the evaporation chamber, when the filter is installed in its correct use position.

Advantageously, the oil is pressurized, e.g. to a pressure of between 8 bars and 40 bars, before it injected through the compressing tubes.

In a preferred embodiment, the evaporation chamber has a sloped floor with an oil drain that during use is configured to be situated at the lowest place of the floor. Hereby is achieved that the oil - relieved form most of the water contaminants - may be drained from the bottom of the evaporation chamber, while the gaseous phase, water steam, is removed from an upper part of the evaporation chamber by blowing in an inert gas or air. Here the terms "lower" and "upper" refers to the lower and upper parts of the evaporation chamber, when the filter is installed in its correct use position.

Advantageously, the oil is pressurized, e.g. to a pressure of between 10 bar and 20 bar, before it is compressed through the compression tubes.

In a preferred embodiment of the filter, the yarn is wound in a series of at least 4 layers around the outer surface of the core, wherein the first layer closest to the surface of the core comprises at least 15 windings of the yarn, the second layer comprises at least 15 windings of the yarn and the third layer comprises at least 10 windings of the yarn, and wherein at least two consecutive layers have been wound in accordance with different winding patterns.

Investigations performed by the applicant has shown that this particular way of building up the filter in a layered structure of yarn that wound onto the tubular core in accordance with winding patterns that are different for three consecutive layers and wherein the layers are built up with the minimum number of windings in the first, second, and third layer as stated above, is particularly effective filtering oil, for particles having a diameter or average particle size in the range from 0.5 µm to 50 µm, without having using excessive pressure, but merely by letting the fluid flow freely through the filter at a pressure that is usually used in engines, power transmissions, such as hydraulics, gears, valves etc.

In one embodiment according to the invention each of the three layers have been wound in accordance with a winding pattern that is different from the winding pattern of the other layers. Hereby is achieved a filter wherein each layer mainly filters particles from the fluid up to a certain size. Thus, allowing a more effective utilization of the total volume of the filter for the filtering purpose.

In another embodiment, the first layer comprises preferably less than 20 windings of the yarn, the second layer comprises less than 20 windings of the yarn, and the third layer comprises less than 15 windings of the yarn.

In a preferred embodiment, the first layer comprises between 15 and 17 windings of the yarn, the second aspect of the invention the second layer comprises between 15 and 20 windings of the yarn, and the third layer comprises between 10 and 15 windings of the yarn.

In order to facilitate a good flow of the fluid through the filter without applying excessive pressure, each of the three layers of the filter comprises, preferably, less than 45 - 65 windings of yarn.

One way of providing a particular winding pattern is by using a particular winding angle, and the applicant has found it advantageous if the first layer of yarn has been wound around the outer surface of the core at an angle larger than 55 degrees with respect to an axis parallel to the tubular core, and the second layer of yarn has been wound around the outer surface of the core at an angle larger than 50 degrees with respect to an axis parallel to the tubular core, and the third layer of yarn has been wound around the outer surface of the core at an angle larger than 45 degrees with respect to an axis parallel to the tubular core. Preferably, the angle with which the yarn has been wound around the core is different for two consecutive layers, in order to facilitate winding patterns that are able to trap particles of different sizes.

Preferably, the yarn comprises a mix of natural and synthetic fibers. Since natural fibers are hydrophilic, while synthetic fibers generally are hydrophobic, a filter wherein the yarn is made of a mix of both natural and synthetic fibers has the additional advantage that in addition to being able to filter particles from the fluid, also water may be absorbed by the yarn and thereby filtered from the fluid without having to heat the filter.

In a preferred embodiment, the natural fibers are chosen from a list of fibers comprising cotton and/or wool and the synthetic fibers are chosen from a list of fibers comprising any of the following materials: acryl, polyester, flax, polyamide, acetate and/or viscose. Cotton and wool are cheap natural fibers that are easy to mix with any or a plurality of the synthetic fibers mentioned above. Thus facilitating an effective, yet cheap yarn that for the filter.

In one embodiment according to the invention, the yarn comprises less than 15% natural fibers. In another embodiment, the yarn comprises more than 45% acryl. In yet another embodiment the yarn comprises more than 20% polyester, and in yet even another embodiment the yarn comprises more than 25% flax.

Preferably, the yarn comprises between 4% and 5% polyamide or between 5% and 10% polyamide.

In an alternative embodiment, the yarn comprises more than 2% viscose, or between 2% and 4% viscose.

Another embodiment of the first aspect of the invention the length of yarn is wound in a series of at least four layers around an outer surface of the core, at least three of the at least four layers being wound in accordance with different winding patterns, the yarn comprising a mixture of natural and synthetic fibers, wherein the natural fibers constitutes less than 15% of the yarn, and the reminder constitutes fibers or a mix of fibers made from one or more of the following synthetic materials: acryl, polyester, flax, polyamide, acetate.

By providing a layered filter with a yarn that is made from a mix of natural constituting less than 15% (of the yarn) and synthetic fibers made from any of the synthetic materials mentioned above, a filter is achieved that is particularly effective for filtering particles having a diameter or an average particle size between 0.5 µm and 50 µm from oil.

In one embodiment according to the invention each of the three layers have been wound in accordance with a winding pattern that is different from the winding pattern of the other layers. Hereby is achieved a filter wherein each layer mainly filters particles from the fluid up to a certain size. Thus, allowing a more effective utilization of the total volume of the filter for the filtering purpose.

According to a preferred embodiment of any of the aspects of the invention, the outer surface of the tubular core is covered with a fluid permeable sheet that covers the core at least one time, the sheet being placed between the outer surface of the core and the first layer of yarn. The sheet is preferably a piece of textile, preferably a tightly woven textile.

According to an embodiment of the invention, the filter may further comprise a housing that completely encloses the tubular core and yarn. The housing further comprises a first opening that is fluidly connected to the hollow interior of the tubular core, and a second opening that is fluidly connected to the layers of yarn. Preferably, the second opening functions as a fluid inlet, and the first opening functions as a fluid outlet. Hereby is achieved a self-contained unit that that may be adapted to be mounted in connection with a power transmission system, such as an engine, hydraulics, gears, valves etc. Furthermore, this self-contained unit may be used as a bypass filter for providing additional filtering in already existing installations and power transmission systems. The housing is preferably made from metal.

In order to facilitate easy exchange of the filter, e.g., when it is worn out, without having to change the whole housing as well, the housing may comprise a container and a cap that is releasable attached to the container.

In one embodiment of any of the aspects of the invention, the first opening is placed in the cap and the second opening is placed in the container, and in another embodiment the second opening is placed in the cap and the first opening is placed in the container.

However, in a preferred embodiment of any of the aspects of the invention both the first and the second openings are placed in the cap. Hereby is achieved an embodiment wherein the filter may be replaced in an easy manner without having to unplug one or both if the first and second openings of the housing. The container may for example just be screwed of the cap and the filter replaced. Alternatively, both the first and second opening is placed in the container.

According to an embodiment of any aspects of the invention, the longitudinal extension of the yarn-covered core is between 4 - 8 times the total radial thicknesses of the layers as measured from the outer surface of the tubular core. The dimensions that are chosen in any particular case may be chosen in dependence of the capacity needed, i.e. how much fluid is needed to be filtered pr. hour. For example, a filter according to any aspects of the invention having a longitudinal extension between 24 cm and 70 cm will be suitable for filtering up to 300 - 2500 l/h (litters/hour).

The above mentioned and further objects are achieved by a second aspect of the invention, pertaining to a method of manufacturing a filter as described above, the method comprising the steps of
- mounting a tubular core with a plurality of apertures and a hollow interior, said core having an open end for fluid communication with the hollow interior, in a winding machine,
- rotating the core at a rate controlled by the winding,
- feeding a yarn to the core through a head in such a way that it winds onto an outer surface of the core,
- moving the head forward and backwards along the longitudinal axis of the core,
- winding a first layer of yarn onto the core comprising at least 15 windings of yarn, a second layer comprising at least 15 windings of the yarn and a third layer comprising at least 10 windings of yarn, by varying the speed of rotation of the core and/or speed of movement of the head between each layer.

In an embodiment, the method further comprises the step of winding each of the three layers in accordance with pre-programmed winding patterns different from the winding patterns of the other layers.

In a further embodiment, the method further comprises the steps of
- winding less than 17 windings of the yarn in the first layer,
- winding less than 20 windings of the yarn in the second layer, and
- winding less than 10 windings of the yarn in the third layer.

In a further embodiment, the method further comprises the steps of
- winding between 15 and 17 windings of the yarn in the first layer,
- winding between 15 and 20 windings of the yarn in the second layer, and
- winding between 10 and 15 windings of the yarn of the third layer.

In a further embodiment, the method further comprises the steps of
- winding less than 30 - 48 windings of yarn in each of the three layers,
- winding the first layer of yarn around the outer surface of the core at an angle larger than 55 degrees with respect to an axis parallel to the tubular core,
- winding the second layer of yarn around the outer surface of the core at an angle larger than 45 degrees with respect to an axis parallel to the tubular core, and
- winding the third layer of yarn around the outer surface of the core at an angle larger than 40 degrees with respect to an axis parallel to the tubular core.

In a further embodiment of the method, the yarn comprises a mix of natural and synthetic fibers.

In a further embodiment of the method, the natural fibers are chosen from a list of fibers comprising cotton and/or wool and wherein the synthetic fibers are chosen from a list of fibers comprising any of the following materials: acryl, polyester, flax, polyamide, acetate.

In an embodiment of the method, the yarn comprises less than 15% natural fibers, and in a further embodiment of the method, the yarn comprises more than 45% acryl, in a yet further embodiment of the method, the yarn comprises more than 20% polyester, and in an yet even further embodiment of the method, the yarn comprises more than 25% flax.

In a further embodiment of the method, the yarn comprises less than 10% polyamide or between 4% and 5% polyamide.

In a further embodiment, the method further comprises the step of varying the winding resistance of the yarn by varying the speed at which the yarn is fed through the head relative to the speed of rotation of the tubular core.

In a further embodiment, the method further comprises the step of winding the yarn around the outer surface of the core with different winding resistance in at least two of the three layers.

In a further embodiment, the method further comprises the step of winding the yarn of the first and third layer around the outer surface of the core with a winding resistance that is larger than the winding resistance used for the second layer.

In a further embodiment, the method further comprises the step of winding the yarn of the first layer around the outer surface of the core with a winding resistance that is larger than the winding resistance used for the second layer, and winding the yarn of the second layer around the outer surface of the core with a winding resistance that is larger than the winding resistance used for the third layer.

In a further embodiment, the method further comprises the step of covering at least in part the outer surface of the tubular core with a fluid permeable sheet prior to the step of winding the yarn onto the core.

The above mentioned and further objects are achieved by a method for removing water from oil, the method comprising the following steps:
- injecting the oil under pressure into the evaporation chamber through a plurality of compression tubes, whereby the oil is decompressed when entering the evaporation chamber,
- removing a part of a gaseous phase of the water from the evaporation chamber by blowing air or an inert gas into the evaporation chamber at a predetermined speed, and
- draining a liquid phase of the oil from the evaporation chamber.

According to an embodiment of the method of removing water from oil, the oil is pressurized to a pressure of between 8 bars to 40 bars before injecting it into the evaporation chamber through the plurality of compression tubes.

According to a further embodiment of the method of removing water from oil, the compression tubes have rifled barrels for imparting a rotational movement to the oil that is injected into the evaporation chamber through the compression tubes.

The above mentioned and further objects are achieved by a method for removing water from oil, the method comprising the following steps:
- injecting the oil into the evaporation chamber through a plurality of compressing tubes, whereby the oil is compressed when entering the evaporation chamber,
- removing a part of a gaseous phase of the water from the evaporation chamber by blowing air or an inert gas into the evaporation chamber at a predetermined speed, and
- draining a liquid phase of the oil from the evaporation chamber.

According to an embodiment of the method of removing water from oil, the oil is pressurized to a pressure of between 10 bars to 20 bars before injecting it into the evaporation chamber through the plurality of compression tubes.

According to a further embodiment of the method of removing water from oil, the compression tubes have rifled barrels for imparting a rotational movement to the oil that is injected into the evaporation chamber through the compression tubes.

The method of removing water from oil, may further comprise the steps of, - leading the oil through at least four layers of yarn that are wound around an outer surface of a tubular core into an hollow interior of the core, wherein the first layer closest to the surface of the core comprises at least 15 windings of the yarn, the second layer comprises at least 15 windings of the yarn, and the third layer comprises at least 10 windings of the yarn, and wherein at least two of the at least three layers have been wound in accordance with different winding patterns.

In a preferred embodiment of the method of filtering oil, said method may utilize a filter manufactured according to any of the above-mentioned embodiments of manufacturing a filter according to the invention.

The above mentioned and further objects are also fulfilled by a filter battery comprising a plurality of filters as described above, said filters being fluidly connected in series for consecutive filtering of oil, through said filters. The oil is first filtered through the first filter in the series, and then through the next, etc., until it reaches the last filter, from which it leaks back to the circuit from where it originated.

### BREIF DESCRIPTION OF THE DRAWINGS

A further understanding of the nature and advantages of the present invention may be realized by reference to the remaining portions of the specification and the drawings. In the following, preferred embodiments of the invention is explained in more detail with reference to the drawings, wherein
Fig. 1 shows a tubular core with a plurality of apertures,
Fig. 2 shows an embodiment of a filter element,
Fig. 3 shows a cross section of an embodiment of a filter element,
Fig. 4 shows a cross section of a filter comprising the synthetic filter and mounting.
Fig. 5 shows an embodiment of a distillation element,
Fig. 6 shows an embodiment of a compression tube,
Fig. 7 shows an open evaporation chamber, wherein the compression tubes can be viewed
Fig. 8 shows a partial longitudinal cross sectional view of an embodiment of a filter element,
Fig. 9 shows another cross sectional view of an embodiment of a filter element,
Fig. 10 shows a tubular core that has been placed in a winding machine,
Fig. 11 shows an embodiment of a method of manufacturing a filter element,
Fig. 12 shows a flow diagram of an embodiment of a method of removing water from oil,
Fig. 13 shows a complete unit with water removal unit start and end block.
Fig. 14 shows a cross section through the water removal unit illustrated in Fig. 13.
Fig. 15 shows an example of a complete assembly of an oil cleaning unit,

### DETAILED DESCRIPTION

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

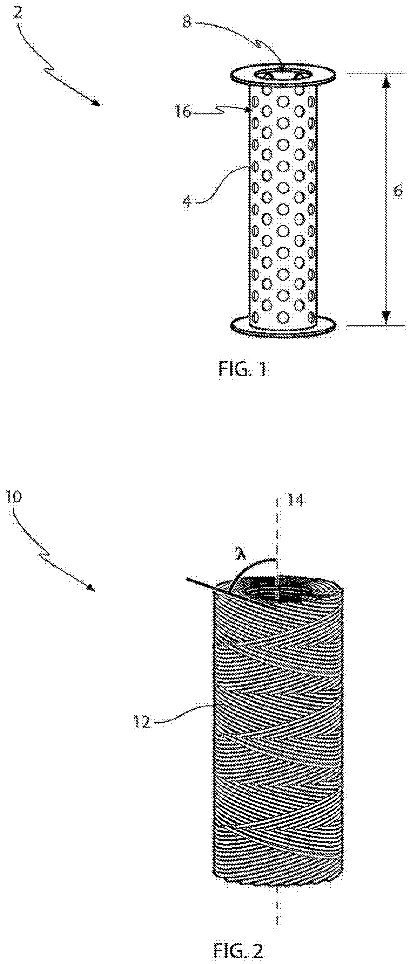

Fig. 1 shows a tubular core 2 with a plurality of apertures 4, a hollow interior 8 and a longitudinal extension indicated by the double arrow 6. The tubular core 2 has an outer surface 16 onto which a yarn may be wound. The illustrated core 2 has a generally cylindrical shape. However, other shapes could also be envisioned.

Fig. 2 shows a filter element 10. The illustrated filter element 10 comprises a tubular core 2 (not visible) as illustrated in Fig. 1 onto which a yarn 12 has been wound. The outermost layer of yarn 12 has been wound onto the tubular core 2 at an angle λ with respect to an axis 14 that is parallel with the longitudinal extension of the tubular core 2. In the illustrated case, the axis 14 is the symmetry axis of the tubular core 2.

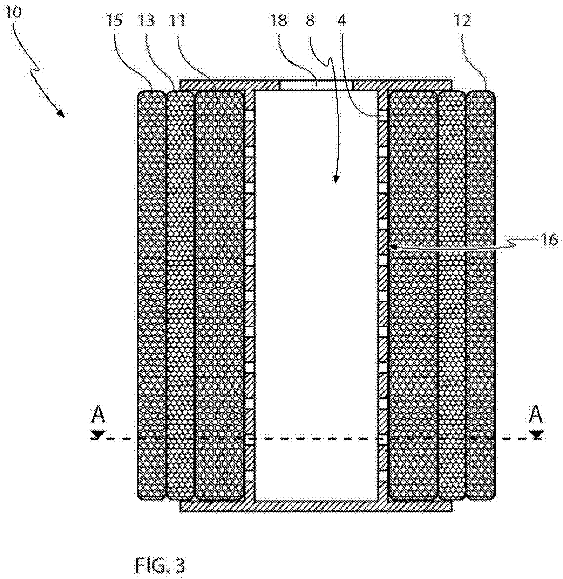

Fig. 3 shows a cross section of a filter element 10. The illustrated filter element 10 comprises a tubular core 2 with a plurality of apertures 4 and a hollow interior 8. The tubular core 2 has an open end 18 for fluid communication with the hollow interior 8. A length of yarn 12 has been wound around the outer surface 16 of the tubular core 2 in a series of 3 layers, 11, 13, and 15, wherein the first layer 15 closest to the outer surface 16 of the tubular core 2 comprises at least 15 windings of the yarn 12. The second layer 17 comprises at least 15 windings of the yarn 12 and the third layer 10 comprises at least 10 windings of the yarn 12. At least two consecutive layers of the three layers 11, 13 and 15 have been wound in accordance with different winding patterns.

Preferably, the first layer 15 comprises between 15 and 17 windings of the yarn 12, the second layer 17 comprises between 15 and 20 windings of the yarn 12, and the third layer 10 comprises between 10 and 15 windings of the yarn 12.

One way of providing a particular winding pattern in the illustrated filter element 10 is by using a particular winding angle λ. The applicant has found it advantageous if the first layer 11 of yarn 12 has been wound around the outer surface 16 of the tubular core 2 at an angle λ larger than 55 degrees with respect to an axis 12 parallel to the longitudinal extension of the tubular core 2, and the second layer 17 of yarn 12 has been wound around the outer surface 10 of the tubular core 2 at an angle λ larger than 45 degrees with respect to an axis 14 parallel to the longitudinal extension of the tubular core 2, and the third layer 10 of yarn 12 has been wound around the outer surface 16 of the tubular core 2 at an angle λ larger than 40 degrees with respect to an axis 14 parallel to the longitudinal extension of the tubular core 2. Preferably, the angle λ with which the yarn 12 has been wound around the tubular core 2 is different for two consecutive layers 10 and 12, in order to facilitate winding patterns that are able to trap particles of different sizes.

In another (not illustrated) embodiment, the filter element 10 may comprise additional layers, for example, the illustrated layer structure of 3 layers 11, 13 and 15 could be repeated for a suitable number of times.

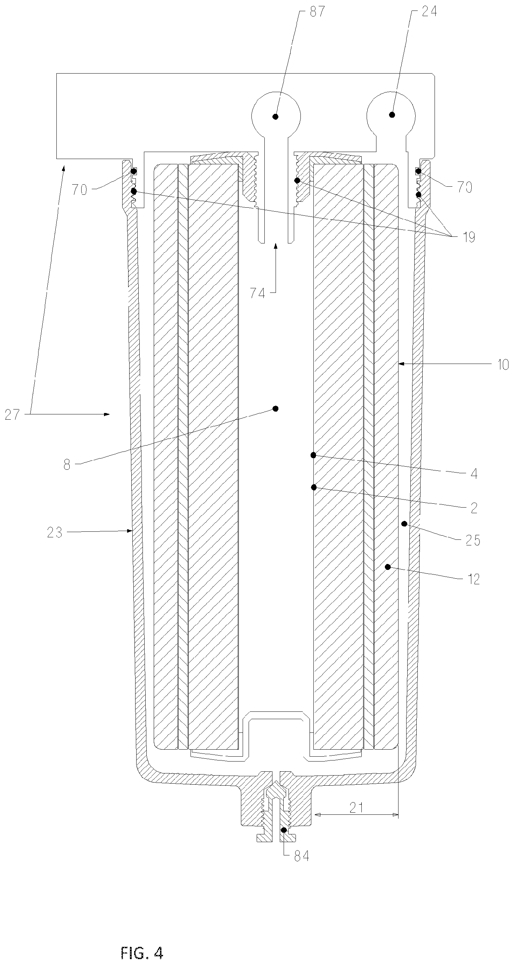

Fig. 4 shows a cross section of a filter comprising the synthetic filter and mounting.
The housing further comprises an inlet opening 24 that are fluidly connected to the layers (not explicitly shown) of yarn 12.

Hereby is achieved a self-contained filter 27 that that may be adapted to be mounted in connection with a power transmission system, such as an engine, hydraulics, gears, valves etc., which is able to remove both solid particle contaminants as well as water from the oils. Furthermore, this self-contained filter 27 may be used as a bypass filter for providing additional filtering in already existing installations and power transmission systems. The housing 17 is preferably made from metal, such as Aluminium.

In order to facilitate easy exchange of the filter element 10, e.g. when it is worn out, without having to change the whole housing 17 as well, the housing 17 may comprise a container 23 that is releasable attached to the housing 17. This releasable attachment could for example be provided by the illustrated threading 19.

In the illustrated embodiment both the drainage pipe 22 and the inlet opening 24 are placed in the cap 20. Hereby is achieved an embodiment wherein the filter element 10 may be replaced in an easy manner without having to unplug one or both if the drainage pipe 22 and inlet opening 24 of the housing 17. The container 23 may for example just be screwed of the cap 20 and the filter element 10 replaced.

According to an embodiment the longitudinal extension 6 of the yarn 12 covered tubular cores 2 is between 5-10 times the total radial thicknesses 21 of the layers as measured from the outer surface 16 of the tubular core 2. The dimensions that are chosen in any particular case may be chosen in dependence of the capacity needed, i.e. how much oil is needed to be filtered pr. hour. For example a filter 10 having a longitudinal extension 6 between 24 cm and 30 cm will be suitable for filtering up to 250 - 500 l/h (liters/hour) of oil, while a filter 10 that has a longitudinal extension 6 between 45 cm and 60 cm will be suitable for filtering up to 1000 - 1500 l/h.

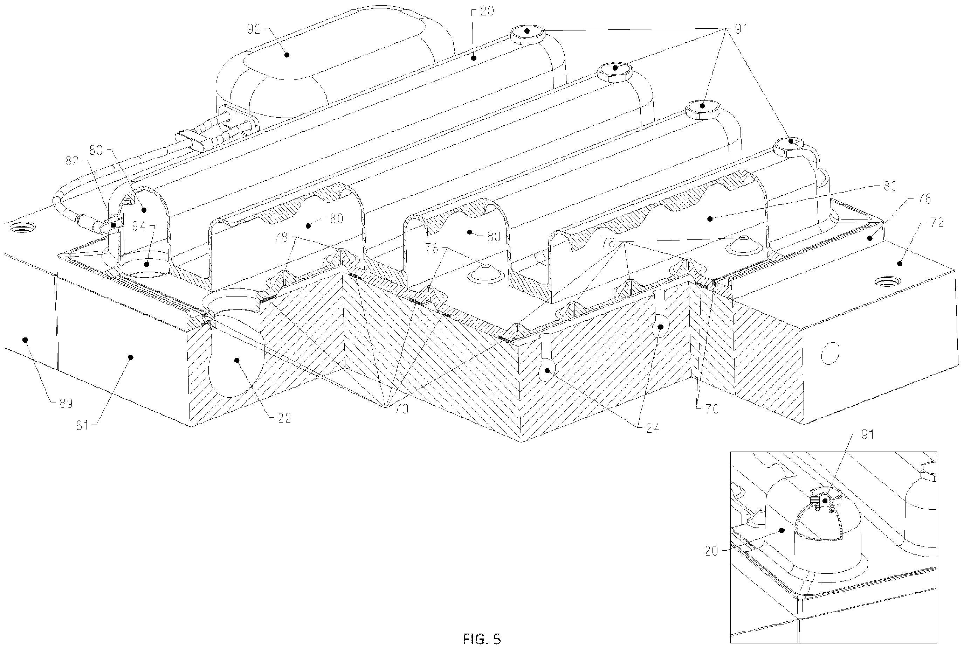

Fig. 5 shows a perspective view of a distillation element, comprising a number of bores 90 for the compressing tubes 78. The bores 90 are situated in the distillation head 76. The oil may undergo heating up to 70 degrees Celsius due to friction and pressure in the compressing tubes 78, whereby separate heating of the distillation head 76 or oil is not needed. Hereby is achieved that the eventual water within the oil is close to or at its boiling temperature, which implies that it easier evaporates from the pressurized oil when injected into the evaporation chamber 80. Moreover a larger quantity of water will evaporate from the droplets. The distillation head 76 are made from a metal or metal alloy comprising aluminium, which has good heat conductivity and low reactivity with oil.

The illustrated main block 81 further having an inlet pipe 24 that in one end 79 is fluidly connected to a container, i.e. the housing 17, adapted to temporarily store the oil to be filtered, and in the other end being fluidly connected to a distillation unit 81, said distillation head comprising a plurality (only three visible) of compressing tubes 78 for injecting the oil into a evaporation chamber 80. In the wall of the evaporation chamber 80, there is provided an inlet 82 for blowing air or an inert gas into said evaporation chamber 80.

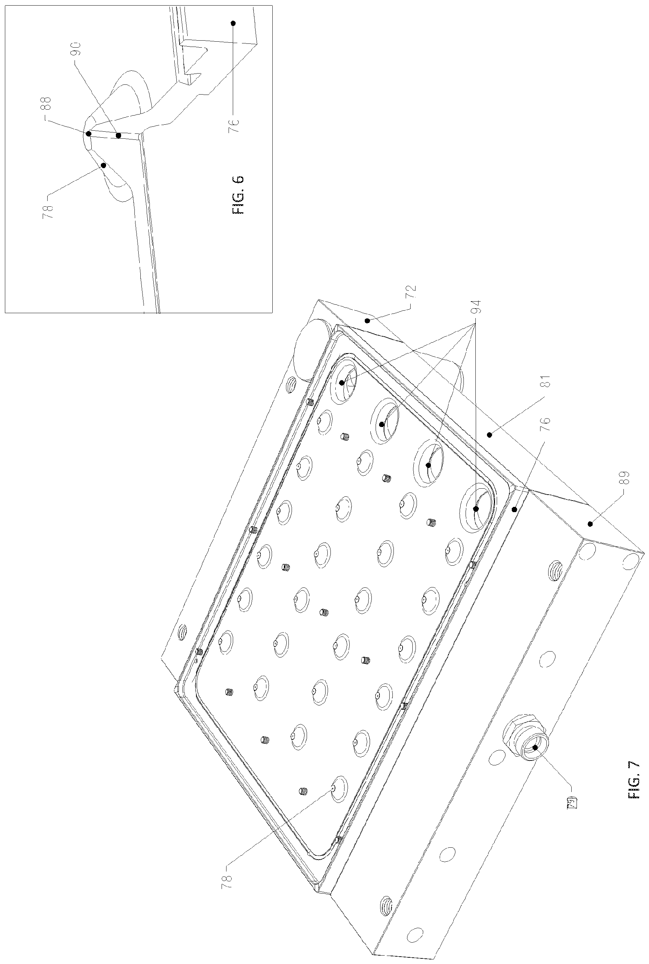

By providing a plurality of compression tubes 78 for injecting the oil into the evaporation chamber 80, the oil is compressed as a liquid into the evaporation chamber 80. Due to the different thermodynamic properties of the oil and the water, they react differently to changes in heat and pressure. These vaporized contaminants; (steam) is then blown out of the evaporation chamber 80 through an opening in the cap 91, while the oil is drained out in liquid form through a drainage pipe 22. A plurality of compressing tubes 78 is used in order to ensure an adequate flow rate, and the actual number of compressing tubes 78 needed may be chosen in dependence of the particular application of the inventive filter 27.
When oil enters the housing 17 through the inlet opening 24 in the cap 20 of the housing 17 it will flow into the hollow interior 25 of the container 23. The oil will then flow through the layers (not illustrated explicitly) of yarn 12 along the total radial thickness 21 of the yarn 12 and into the hollow interior 8 of the tubular core 2 via the apertures 4. During its flow through the layers (not explicitly illustrated in this figure, but see for example figure 3 and 6) of yarn 12, particles present in the oil are deposited in the layers of yarn 12. From the hollow interior 8 of the tubular core 2 the oil will flow through a hose 108, into the inlet connector 79 to the main block 81 and injected through the compressing tubes 78 into the evaporation chamber 80 and eventually be drained out into the main block 81 through the drainage pipe 106.

Fig. 6 illustrates a cross section of an embodiment of a compression tube 78. The compression tubes 78 have barrel openings 88 that are smaller than 7 mm, preferably smaller than 3 mm or between 0.5 mm and 7 mm, preferably between 0.5 mm and 3 mm, more preferably between 0.7 and 1.2 mm. Separation is achieved by selecting a barrel size that creates a significant pressure differential across the opening 88. The viscosity of different oils is largely dependent of temperature, so the barrel sizes are preferably chosen in dependence of the temperature increase the oil undergoes during friction with the barrels, and the type of oil to be filtered. To this end the applicant estimates that by using barrel sizes as mentioned above it would be possible to separate water from most types of oils.

However, there is a delicate balance in selecting proper barrel opening sizes, because the opening size controls both the extent of separation and the flow rate through the filter 27. Selection of the barrel opening 88 also controls the pressure differential between the oil inlet 24 and the evaporation chamber 80.

The compression tube 78 have preferably a barrel 90 that is rifled in order to thereby impart a rotational motion to the compressed injected oil and thereby enhance the separation (evaporation) of contaminants from them.

In a preferred embodiment the length of the barrel 90 of each of the compression tubes 78 is between 4 mm and 40 mm.

The technical industries have particular difficulties with water contaminants in oils for lubrication and different transmissions or transformers (hydraulics, gears, valves etc.). These water contaminants mainly arise from condensation, leaks, frost, etc.. Non combusted fuel remnants, acids and eventually other alien liquids can also be present, where especially acids may be formed in the presence of water.

Fig. 7 shows a perspective view of an "open" evaporation chamber 80, wherein the distillation head 76 with a number of compressing tubes 78 can be seen. The evaporation chamber 80 has a floor with drain 94 for leading the oil to the drainage pipe 22/106. During proper use of the filter 27, the drain 94 is configured to be situated at the lowest place of the floor. Hereby is achieved that the oil - relieved form most of the water contaminants - may be drained from the bottom of the evaporation chamber 80, while the gaseous phase, i.e. steam, blown out from an upper part of the evaporation chamber 80 by blowing air or an inert gas into said evaporation chamber 80. Here the terms "lower" and "upper" refers to the lower and upper parts of the evaporation chamber 80, when the filter 27 is installed in its correct use position.

Advantageously, the oil is pressurized, e.g. to a pressure of between 8 bars and 40 bars, before it is injected through the compressing tubes 78.

Also shown is the start block 89 and end block 72.

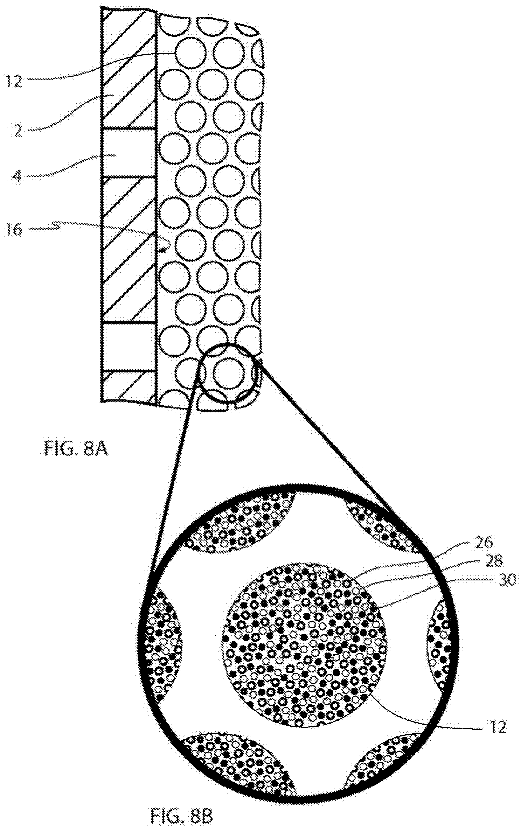

Fig. 8 shows a partial longitudinal cross sectional view of an embodiment of a filter element 10 according to the invention. Illustrated is a part of the tubular core 2 having a number of apertures 4. Around the outer surface 16 of the tubular core 2 is wound a yarn 12 in a number of layers (not illustrated), wherein only the first two windings of the first layer is illustrated.

The yarn 12 comprises a number of fibers 26, 28 and 30 (of which only three have been given designation numbers in order to increase the intelligibility of the figure).

Preferably, the yarn 12 comprises a mix of natural and synthetic fibers. For example in the illustrated embodiment, the fibers 26 and 30 may be natural, while the fiber 28 may be synthetic. Since natural fibers 26 and 30 are hydrophilic, while synthetic fibers 28 generally are hydrophobic, a filter element 10 wherein the yarn 12 is made of a mix of both natural (26 and 30) and synthetic (28) fibers has the additional advantage that in addition to being able to filter particles from the oil, also water may be absorbed by the yarn 12 and thereby filtered from the oil.

In a preferred embodiment, the natural fibers 26 and 30 are chosen from a list of fibers comprising cotton and/or wool and the synthetic fibers (28) are chosen from a list of fibers comprising any of the following materials: acryl, polyester, flax, polyamide, acetate and/or viscose. Cotton and wool are cheap natural fibers that are easy to mix with any or a plurality of the synthetic fibers mentioned above. Thus facilitating an effective, yet cheap yarn 12 for the filter element 10.

In one embodiment according to the invention, the yarn 12 comprises less than 15% natural fibers. In another embodiment, the yarn 12 comprises more than 45% acryl. In yet another embodiment the yarn 12 comprises more than 20% polyester, and in yet even another embodiment the yarn 12 comprises more than 25% flax.

Preferably, the yarn 12 comprises less than 10% polyamide or between 4% and 5% polyamide.

In an alternative embodiment, the yarn 12 comprises more than 2% viscose, or between 2% and 4% viscose.

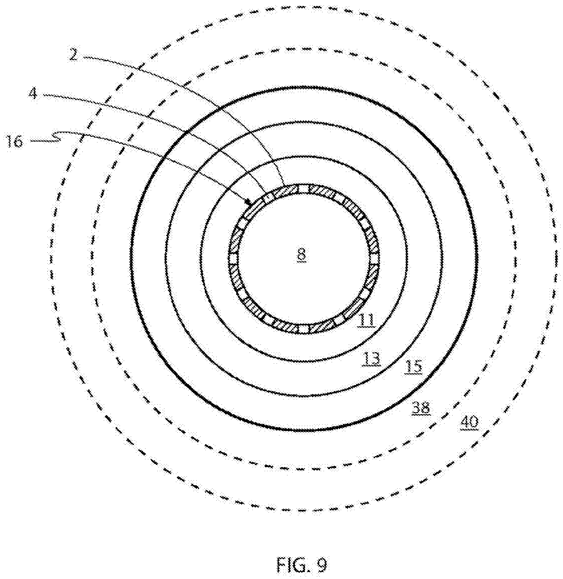

Fig. 9 shows the embodiment of a filter element 10 as illustrated in Fig. 3 cut along the dashed line A in order to illustrate the layered structure of yarn 12 more clearly. Illustrated is the tubular core 2 with a number of apertures 4 and a hollow interior 8. Around the outer surface 16 of the tubular core two is illustrated the first layer 11 of yarn that has been wound around the tubular core 2 in accordance with a particular winding pattern. Also illustrated is the second 13 and third 15 layer of yarn 12. In addition to these layers 11, 13 and 15 additional layers may be provided in alternative embodiments as is illustrated by the layers 38 and 40.

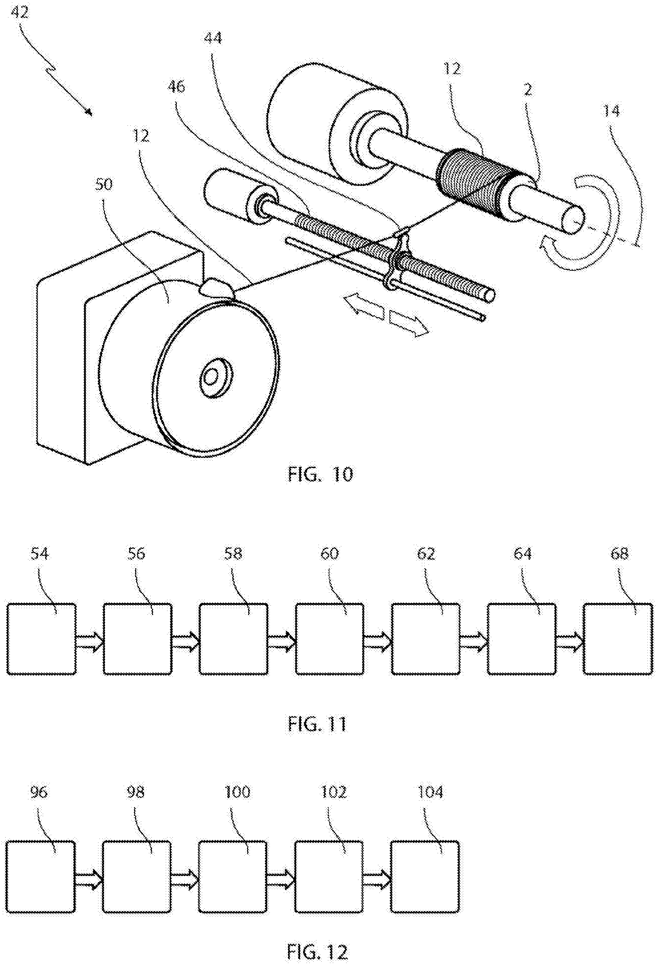

Fig. 10 shows a tubular core 2 that has been placed in a winding machine 42. The tubular core 2 is rotated with respect to the axis 15, while the yarn 12 is fed through a head 44 to the tubular core 2. The rotation of the tubular core 2 may be manually controlled, but is preferably automatically controlled by the winding machine 42 or a computer (not illustrated) controlling the winding machine 42. Meanwhile the head 44 is moved back and forth (as illustrated by the double arrow 48) on the rail 46 parallel to the axis 14 at a controlled rate. By varying the speed of the head 44 along the rail 48 and/or rotation of the tubular core 2 with respect to the axis 14 varying winding patterns may be produced. In particular, a layered structure of yarn 12 with a certain number of windings of the yarn 12 and a certain winding pattern for each or some of the layers may be provided for. In the illustrated embodiment, the yarn 12 is provided from a yarn supply 50 holding a larger quantity of yarn 12.

In a preferred embodiment of any of the filter elements 10 illustrated in any of the figures 2 - 4, 8 and 9 the yarn 12 has been wound around the outer surface 16 of the core 2 with different winding resistance in at least two of the three layers (11, 13, and 15). Hereby is provided a simple way to vary the density of the yarn 12 in the different layers 11, 13 and 15. This influences the flow of the oil through the layers and therefore the way the particles are deposited in the different layers. In a particularly preferred embodiment, the yarn 12 of the first 15 and third 15 layer has been wound around the outer surface 16 of the core 2 with a winding resistance that is larger than the winding resistance used for the second layer 13. Hereby the oil under a certain pressure will meet first a harder resistance then a lesser resistance and then again a harder resistance when passing through the filter media (the layers of yarn 12). This also has the effect of first slowing down, then accelerating and then slowing down again of the oil when passing through the filtration media (layers of yarn 12). By a suitable adjustment of the winding resistance, the filter 10 may be designed to be particularly effective in filtering particles of a particular size from the oil, which means that it can be optimized for a particular use, wherein particles of a certain size are a problem.

The winding resistance may be adjusted by varying the speed at which the yarn 12 is fed through the head 44 relative to the speed of rotation of the tubular core with respect to the axis 14. The winding machine 42 preferably automatically controls this adjustment of the winding resistance.

In another embodiment of any of the filter elements 10 illustrated in any of the figures 2 - 4, 8 and 9, the yarn 12 of the first layer 15 (closest to the core 2) has been wound around the outer surface 16 of the core 2 with a winding resistance that is larger than the winding resistance used for the second layer 17, and wherein the yarn 12 of the third layer 15 has been wound around the outer surface 15 of the core 2 with a winding resistance that is larger than the winding resistance used for the second layer 13. Hereby is achieved an embodiment wherein the fluid is slowed down more and more for each layer it passes through during its flow through the filtering media (the layers of yarn 12).

While it has not been illustrated in any of the figures, the outer surface 16 of the tubular core 12 illustrated in any of the figures may also be covered with a fluid permeable sheet that covers the outer surface 16 of the tubular core 2 at least one time. The sheet, thus being placed between the outer surface 16 of the core 2 and the first layer 11 of yarn 12. The sheet is preferably a piece of textile, preferably a tightly woven textile.

In the following more specific examples of filter elements 10 are given, wherein

### EXAMPLE 1

In a preferred embodiment of a filter element 10 as illustrated in any of the figures 2-4 and 8, the first layer 15 comprises 15 - 17 windings of the yarn 12 that has been wound onto the tubular core 2 at an angle λ of 55 degrees (both ways), the second layer 17 comprises 15 - 20 windings of the yarn 12 that has been wound onto the tubular core 2 at an angle λ of 55 degrees (both ways) and wherein the third layer 15 comprises 15 - 17 windings of the yarn 12 that has been wound onto the tubular core 2 at the angle λ of 65 degrees. Specifically in the above-mentioned preferred embodiment of the filter element 10, the first layer 15 may comprise 17 windings of the yarn 12, the second layer 15 may comprise 15 windings of the yarn 12 and the third layer 15 may comprise 17 windings of the yarn 12. Investigations have shown that a filter element 10 according to this specific example 1 is particularly well suited for filtering particles having a diameter or average particle size of 0.5 µm - 50 µm from an oil, e.g. engine oil or hydraulic oil. A filter 10 according to this example 1 with a longitudinal length of 45 - 70 cm has the capacity of filtering up to 1000 L/h - 2500 L/h of oil.

### EXAMPLE 2

In another preferred embodiment of a filter element 10 as illustrated in any of the figures 2 - 4, 8 and 9, the yarn 12 comprises a mixture of fibers made from: 5% - 15% cotton, 45% - 48 % acryl, 25% - 27% flax, 20% - 22% polyester, and 4% - 5% polyamide.

### EXAMPLE 3

In yet another preferred embodiment of a filter element 10 as illustrated in any of the figures 2 - 4, 8 and 9, the layered structure of example 1 is used in combination with the composition of the yarn 12 used in example 2. Investigations have shown that a filter 10 according to this specific example 3 is even better suited for filtering particles having a diameter or average particle size of 0.5 µm - 50 µm from an oil, e.g. engine oil or hydraulic oil. A filter element 10 according to this example 3 with a longitudinal length of 45 - 70 cm has the capacity of filtering up to 1000 L/h - 2500 L/h of oil.

Fig. 11 shows a flow diagram of a method of manufacturing a filter element 10 illustrated in any of the figures 2 - 4, 8 and 9, where the method comprises the steps
- mounting the tubular core 2 with a plurality of apertures 4 and a hollow interior 8 in a winding machine 42, as indicated by the block 54.
- rotating the core 2 at a rate controlled by the winding machine 42, as indicated by the block 56. This step 56 could for example be done manually or at a pre-programmed rate,
- feeding a yarn 12 to the core 2 through a head 44 in such a way that it winds onto an outer surface 16 of the core 2, as indicated by the block 58.
- moving the head 44 forward and backwards along the longitudinal axis 14 of the core 2, as indicated by the block 60.
- winding a first layer 15 of yarn 12 onto the core 2 comprising at least 5 windings of yarn 12, as indicated by the block 62,
- winding a second layer 17 of yarn 12 onto the core 2 comprising at least 6 windings of the yarn 12, as indicated by the block 64, and
- winding a third layer 15 of yarn onto the core 2 comprising at least 10 windings of yarn 12, as indicated by the block 68. The speed of rotation of the core 2 and/or speed of movement of the head 44 is varied between each layer 11, 13 and 15, i.e. between each of the steps 62, 64 and 68.

The method illustrated by the flow diagram in Fig. 11 may further comprise the step of varying the winding resistance of the yarn 12 by varying the speed at which the yarn 12 is feed through the head 44 relative to the speed of rotation of the tubular core 2 with respect to the axis 14.

Fig. 12 shows a flow diagram of a method for removing water from oil, the method comprising the following steps:
- pressurizing the oil to a pressure of between 10 bar to 20, as indicated by the block 96,
- leading the oil through at least four layers of yarn 12 that are wound around an outer surface of a tubular core 2 into an hollow interior 8 of the core 2, wherein the first layer 11 closest to the surface of the core 2 comprises at least 5 windings of the yarn, the second layer 13 comprises at least 6 windings of the yarn, and the third layer 15 comprises at least 10 windings of the yarn, and wherein at least two of the at least three layers have been wound in accordance with different winding patterns, as indicated by the block 98,
- injecting the oil into the evaporation chamber 80 through a plurality of compression tubes 78, whereby the oil is compressed when entering the evaporation chamber 80, as indicated by the block 100,
- removing a part of a gaseous phase of the water from the evaporation chamber 80 by blowing air or an inert gas into the evaporation chamber at a predetermined speed, as indicated by the block 102, and
- draining a liquid phase of the oil from the evaporation chamber 80, as indicated by the block 104.

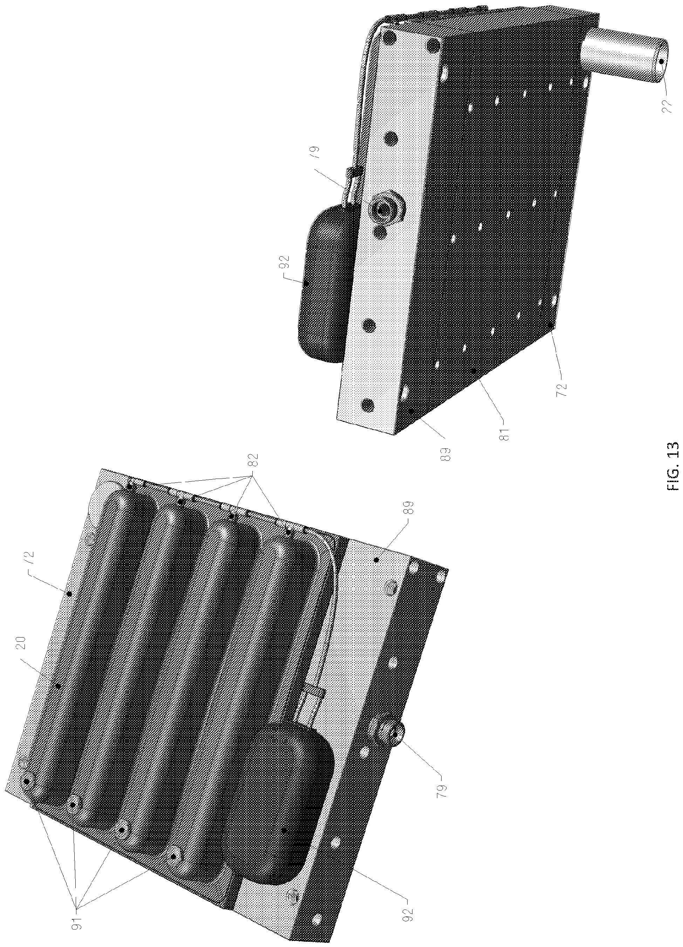

Fig. 13 shows a complete unit with water removal unit start and end block. The oil is first led to the first filter 27 via the inlet hose 110, where it is filtered, and then through a hose to the start block 89, inlet 79, where the water is removed, and from which it leaks back to the circuit from where it originated via the outlet pipe 85. The filters 27 are via air/gas pipes 82 fluidly connected to a blower 92 for blowing air or an inert gas into the evaporation chamber 80 during use in order to remove the water vapor within the evaporation chamber 80. In those cases, wherein an inert gas is to be blown into the evaporation chamber 80, instead of air, the blower 81 is connected to a source of inert gas (not shown).

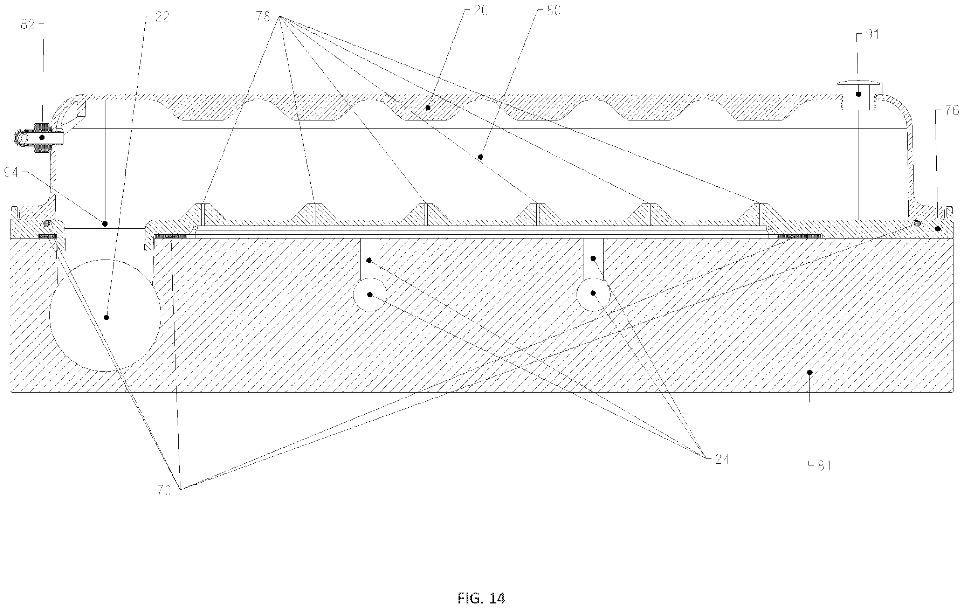

Fig. 14 is showing a partial cross section of the complete water removing unit illustrated in Fig. 13.

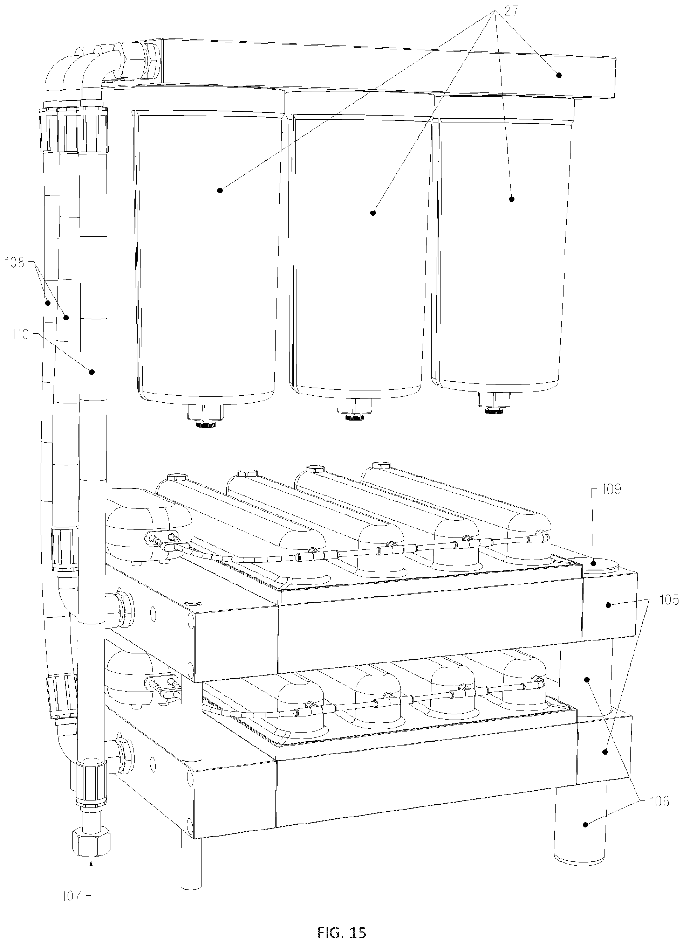

Fig. 15 shows an example of a complete assembly of an oil cleaning unit.

### LIST OF REFERENCES

In the following is given a list of reference numbers used in the detailed description of the invention.
- 2: tubular cores,
- 4: apertures in the tubular core,
- 6: longitudinal extension of the tubular core,
- 8: hollow interior of the tubular core,
- 10: filter element,
- 11: first layer of yarn,
- 12: yarn,
- 13: second layer of the yarn,
- 14: longitudinal axis of the tubular core,
- 15: third layer of the yarn,
- 16: outer surface of the tubular core,
- 17: housing,
- 18: open end of tubular core,
- 19: threading,
- 20: chamber component,
- 21: total radial thickness of the yarn,
- 22: drainage pipe,
- 23: containers,
- 24: inlet opening,
- 25: hollow interior of the container,
- 26: natural fibers,
- 27: filter unit,
- 28: synthetic fibers,
- 30: natural fibers,
- 38: additional optional layer of yarn,
- 40: additional optional layer of yarn,
- 42: winding machine,
- 44: head,
- 46: rails,
- 50: yarn supply,
- 54 - 68: method steps,
- 70: seals
- 72: end block
- 74: open end of pipe of the distillation element,
- 76: distillation head,
- 78: compression tube,
- 79: inlet connector,
- 80: evaporation chamber,
- 81: main blocks
- 82: inlet opening for blowing air or inert gas into the evaporation chamber,
- 83: filter battery,
- 84: drain plug
- 85: outlet pipe,
- 86: oil pipe connecting two filters,
- 87: oil outlet
- 88: compression tube opening,
- 89: start block
- 90: barrel of compression tube,
- 91: air/gas venting filter
- 92: air pump / gas generator
- 94: drain in the floor of the distillation chamber
- 96- 104: method steps.
- 105: assembled water removing block
- 106: outlet pipe for oil to tank
- 107: oil inlet
- 108: oil hose(s) between 27 and 105
- 109: cover
- 110: oil hose from pump to 27

## Claims

1. A filter for the removal of water from oil, the filter comprising a distillation element having an inlet pipe that in one end is to be fluidly connectable to a reservoir of oil to be filtered, and in the other end being fluidly connected to a distillation head (76), , the filter further comprising a tubular core (2) with a plurality of apertures (4) and a hollow interior (8), said core (2) having an open end for fluid communication with the hollow interior (8), a length of yarn wound around an outer surface (16) of the core (2), said distillation head (76) is comprising a plurality of compressing tubes (78) for injecting said oil into an evaporation chamber (80), whereby eventual water within the oil evaporates from said oil, and **characterized in that** the filter further comprises means for blowing air or an inert gas into the evaporation chamber (80) for removal of the water vapor during use of the filter.

2. The filter according to claim 1, wherein said means for blowing air or an inert gas into the evaporation chamber (80) is a fan that is in fluid communication with said evaporation chamber (80) via a pipe.

3. The filter according to claim 1 or 2, wherein the evaporation chamber (80) comprises an outlet for the air or inert gas, which during use is blown into the evaporation chamber (80).

4. The filter according to claim 1, 2 or 3, wherein the pipe and distillation head (76) is made from a metal or metal alloy comprising aluminium.

5. The filter according to any of the preceding claims, wherein each of the compressing tubes (78) have barrel sizes that are smaller than 7 mm, preferably smaller than 3 mm or between 0.5 mm and 7 mm, preferably between 0.5 mm and 3 mm, more preferably between 0.7 and 1.2 mm.

6. The filter according to any of the preceding claims, wherein the length of the barrel of each of the compressing tubes (78) is between 4 mm and 40 mm.

7. The filter according to any of the preceding claims, wherein the oil is pressurized before it is injected through the compressing tubes (78).

8. The filter according to any of the claims 1 - 7, wherein the yarn (12) is wound in a series of at least three layers around the outer surface of the core (2), wherein the first layer closest to the surface of the core (2) comprises at least 5 windings of the yarn (12), the second layer comprises at least 6 windings of the yarn (12) and the third layer comprises at least 10 windings of the yarn (12), and wherein at least two consecutive layers have been wound in accordance with different winding patterns.

9. The filter according to claim 8, wherein the yarn (12) comprises a mix of natural and synthetic fibers, and wherein the natural fibers are chosen from a list of fibers comprising cotton and/or wool and wherein the synthetic fibers are chosen from a list of fibers comprising any of the following materials: acryl, polyester, flax, polyamide, acetate and/or viscose.

10. The filter according to any of the claims 8 to 9, wherein each of the at least three layers has been wound in accordance with a winding patterns different from the winding pattern of the other layers.

11. The filter according to any of the preceding claims, further comprising a housing that completely encloses the tubular core (2) and yarn (12), and wherein the housing (17) further comprises a first opening that is fluidly connected to the hollow interior (8) of the tubular core (2) and a second opening that is fluidly connected to the layers of yarn (12).

12. A method for removing water from oil by a filter according to one of the claims above, the method comprising the following steps:
- injecting the oil under pressure into the evaporation chamber (80) through a plurality of compressing tubes (78), whereby the oil is decompressed when entering the evaporation chamber (80),
- removing a part of a gaseous phase of the water from the evaporation chamber (80) by blowing air or an inert gas into the evaporation chamber (80) at a predetermined speed, and
- draining a liquid phase of the oil from the evaporation chamber (80).

13. A filter battery comprising a plurality of filters according to any of the claims 1 - 11, fluidly connected in series for consecutive filtering of oil, through said filters.

## Patentansprüche

1. Filter zur Entfernung von Wasser aus Öl, wobei der Filter ein Destillationselement umfasst, das ein Zuleitungsrohr aufweist, das an einem Ende mit einem zu filternden Ölbehälter in Fluidverbindung bringbar ist, und am anderen Ende in Fluidverbindung mit einem Destillationskopf (76) ist, wobei der Filter weiterhin einen rohrförmigen Kern (2) mit einer Mehrzahl von Öffnungen (4) und einen hohlen Innenraum (8) umfasst, wobei dieser Kern (2) ein offenes Ende für eine Fluidverbindung mit dem hohlen Innenraum (8) und eine um eine äußere Oberfläche (16) des Kerns (2) gewundene Garnlänge aufweist, wobei der Destillationskopf (76) eine Mehrzahl von Kompressionsschläuchen (78) zur Einspritzung des Öls in eine Verdampfungskammer (80) umfasst, wodurch allfälliges Wasser im Öl aus dem Öl verdampft, **dadurch gekennzeichnet, dass**
der Filter weiterhin eine Vorrichtung zum Einblasen von Luft oder eines Inertgases in die Verdampfungskammer (80) zur Entfernung des Wasserdampfes während der Verwendung des Filters aufweist.

2. Filter nach Anspruch 1, wobei diese Vorrichtung zum Einblasen von Luft oder eines Inertgases in die Verdampfungskammer (80) ein Gebläse ist, das über ein Rohr in Fluidverbindung mit der Verdampfungskammer (80) ist.

3. Filter nach Anspruch 1 oder 2, wobei die Verdampfungskammer (80) einen Auslass für die Luft oder das Inertgas umfasst, die/das während der Verwendung in die Verdampfungskammer (80) geblasen wird.

4. Filter nach Anspruch 1, 2 oder 3, wobei das Rohr und der Destillationskopf (76) aus einem Metall oder einer Metalllegierung, die Aluminium umfasst, bestehen.

5. Filter nach einem der vorhergehenden Ansprüche, wobei jeder der Kompressionsschläuche (78) eine Fließkanalgröße von unter 7 mm, vorzugsweise unter 3 mm oder zwischen 0,5 mm und 7 mm, vorzugsweise zwischen 0,5 mm und 3 mm, und noch bevorzugter zwischen 0,7 und 1,2 mm aufweist.

6. Filter nach einem der vorhergehenden Ansprüche, wobei die Länge des Fließkanals jedes der Kompressionsschläuche (78) zwischen 4 mm und 40 mm beträgt.

7. Filter nach einem der vorhergehenden Ansprüche, wobei das Öl vor der Einspritzung durch die Kompressionsschläuche (78) druckbeaufschlagt wird.

8. Filter nach einem der Ansprüche 1 - 7, wobei das Garn (12) in einer Reihe von mindestens drei Schichten um die äußere Oberfläche des Kerns (2) gewunden ist, wobei die erste Schicht, die am dichtesten an der Oberfläche des Kerns (2) liegt, mindestens 5 Wicklungen des Garns (12) umfasst; die zweite Schicht mindestens 6 Wicklungen des Garns (12) umfasst und die dritte Schicht mindestens 10 Wicklungen des Garns (12) umfasst, und wobei mindestens zwei aufeinanderfolgende Schichten nach unterschiedlichen Wicklungsmustern gewickelt wurden.

9. Filter nach Anspruch 8, wobei das Garn (12) eine Kombination aus natürlichen und synthetischen Fasern umfasst, und wobei die natürlichen Fasern aus einer Liste von Fasern ausgewählt sind, die Baumwolle und/oder Wolle umfassen, und wobei die synthetischen Fasern aus einer Liste von Fasern ausgewählt sind, die eines der folgenden Materialien umfassen: Acryl, Polyester, Flachs, Polyamid, Acetat und/oder Viskose.

10. Filter nach einem der Ansprüche 8 bis 9, wobei jede der mindestens drei Schichten nach einem Wicklungsmuster gewickelt wurde, das sich vom Wicklungsmuster der anderen Schichten unterscheidet.

11. Filter nach einem der vorhergehenden Ansprüche, weiterhin umfassend ein Gehäuse, das den rohrförmigen Kern (2) und das Garn (12) vollständig umschließt, und wobei das Gehäuse (17) weiterhin eine erste Öffnung, die in Fluidverbindung mit dem hohlen Innenraum (8) des rohrförmigen Kerns (2) ist, sowie eine zweite Öffnung umfasst, die in Fluidverbindung mit den Schichten von Garn (12) ist.

12. Verfahren zum Entfernen von Wasser aus Öl durch einen Filter nach einem der vorstehenden Ansprüche, wobei das Verfahren die folgenden Schritte umfasst:
- Einspritzen des Öls unter Druck in die Verdampfungskammer (80) durch eine Mehrzahl von Kompressionsschläuchen (78), wobei das Öl bei Eintritt in die Verdampfungskammer (80) dekomprimiert wird,
- Entfernen eines Teils einer gasförmigen Phase des Wassers aus der Verdampfungskammer (80) durch Einblasen von Luft oder Inertgas in die Verdampfungskammer (80) mit einer vorbestimmten Geschwindigkeit und
- Ableiten einer flüssigen Phase des Öl aus der Verdampfungskammer (80).

13. Filteranordnung, umfassend eine Mehrzahl von Filtern nach einem der Ansprüche 1 bis 11, die zur aufeinanderfolgenden Filterung von Öl durch diese Filter in Reihe geschaltet in Fluidverbindung stehen.

## Revendications

1. Filtre pour éliminer de l'eau d'une huile, le filtre comprenant un élément de distillation présentant un tuyau d'admission qui dans une extrémité doit pouvoir être raccordé fluidiquement à un réservoir d'huile pour être filtré, et dans l'autre extrémité doit pouvoir être raccordé fluidiquement à une colonne de distillation (76), le filtre comprenant en outre une âme (2) tubulaire avec une pluralité d'ouvertures (4) et un intérieur (8) creux, ladite âme (2) présentant une extrémité ouverte pour une communication fluidique avec l'intérieur (8) creux, une longueur de fil enroulé autour d'une surface (16) extérieure de l'âme (2), ladite colonne de distillation (76) comprend une pluralité de tubes compressibles (78) pour injecter ladite huile jusque dans une chambre d'évaporation (80), moyennant quoi une eau ultime à l'intérieur de l'huile s'évapore depuis ladite huile, et **caractérisé en ce que**
le filtre comprend en outre un moyen pour souffler de l'air ou un gaz inerte jusque dans la chambre d'évaporation (80) pour éliminer la vapeur d'eau pendant une utilisation du filtre.

2. Filtre selon la revendication 1, dans lequel ledit moyen pour souffler de l'air ou un gaz inerte jusque dans la chambre d'évaporation (80) est un ventilateur qui est en communication fluidique avec ladite chambre d'évaporation (80) via un tuyau.

3. Filtre selon la revendication 1 ou 2, dans lequel la chambre d'évaporation (80) comprend une évacuation pour l'air ou gaz inerte, qui pendant utilisation est soufflé jusque dans la chambre d'évaporation (80).

4. Filtre selon la revendication 1, 2 ou 3, dans lequel le tuyau et colonne de distillation (76) est fabriqué dans un métal ou un alliage métallique comprenant de l'aluminium.

5. Filtre selon l'une quelconque des revendications précédentes, dans lequel chacun des tubes compressibles (78) présentent des dimensions cylindriques qui sont inférieures à 7 mm, de préférence inférieures à 3 mm ou entre 0,5 mm et 7 mm, de préférence entre 0,5 mm et 3 mm, davantage de préférence entre 0,7 mm et 1,2 mm.

6. Filtre selon l'une quelconque des revendications précédentes, dans lequel la longueur du cylindre de chacun des tubes compressibles (78) est entre 4 mm et 40 mm.

7. Filtre selon l'une quelconque des revendications précédentes, dans lequel l'huile est mise sous pression avant d'être injectée à travers les tubes compressibles (78).

8. Filtre selon l'une quelconque des revendications 1 à 7, dans lequel le fil (12) est enroulé dans une série d'au moins trois couches autour de la surface extérieure de l'âme (2), dans lequel la première couche la plus proche de la surface de l'âme (2) comprend au moins 5 enroulages du fil (12), la deuxième couche comprend au moins 6 enroulages du fil (12) et la troisième couche comprend au moins 10 enroulages du fil (12), et dans lequel au moins deux couches consécutives ont été enroulées en fonction de modèles d'enroulage différents.

9. Filtre selon la revendication 8, dans lequel le fil (12) comprend un mélange de fibres naturelles et synthétiques, et dans lequel les fibres naturelles sont choisies dans une liste de fibres comprenant du coton et/ou de la laine et dans lequel les fibres synthétiques sont choisies dans une liste de fibres comprenant l'un quelconque des matériaux suivants : acryl, polyester, lin, polyamide, acétate et/ou viscose.

10. Filtre selon l'une quelconque des revendications 8 à 9, dans lequel chacune des au moins trois couches a été enroulée en fonction d'un modèle d'enroulage différent du modèle d'enroulage des autres couches.

11. Filtre selon l'une quelconque des revendications précédentes, comprenant en outre un logement qui enferme complètement l'âme (2) tubulaire et le fil (12), et dans lequel le logement (17) comprend en outre un premier orifice qui est raccordé fluidiquement à l'intérieur (8) creux de l'âme (2) tubulaire et un second orifice qui est raccordé fluidiquement aux couches de fil (12).

12. Procédé pour éliminer de l'eau d'une huile avec un filtre selon l'une quelconque des revendications précédentes, le procédé comprenant les étapes suivantes :
- injection de l'huile sous pression jusque dans la chambre d'évaporation (80) à travers une pluralité de tubes compressibles (78), moyennant quoi l'huile est décompressée lorsqu'elle pénètre la chambre d'évaporation (80),
- élimination d'une partie d'une phase gazeuse de l'eau depuis la chambre d'évaporation (80) en soufflant de l'air ou un gaz inerte jusque dans la chambre d'évaporation (80) à une vitesse prédéterminée, et
- drainage d'une phase liquide de l'huile depuis la chambre d'évaporation (80).

13. Batterie de filtration comprenant une pluralité de filtres selon l'une quelconque des revendications 1 à 11, raccordés fluidiquement en série pour un filtrage consécutif d'une huile, à travers lesdits filtres.
